# EUROPEAN PATENT APPLICATION

(11) **EP 3 787 246 A1**
(43) Date of publication of application: **03.03.2021**
(21) Application number: 19194148.3
(22) Date of filing: 28.08.2019
(51) Int. Cl.: H04L 12/931, H04L 12/935, H04L 12/66, H04L 12/28

(54) **LOCAL AREA NETWORK**

(71) Applicant: British Telecommunications public limited company, London EC1A 7AJ (GB)
(72) Inventor: The designation of the inventor has not yet been filed
(74) Representative: British Telecommunications public limited company Intellectual Property Department

(57) **Abstract**

A network 6 of coaxial cables, originally installed in domestic premises 1 to connect a TV antenna 2 to a number of TV receivers 11 through a distributor/amplifier 3, is repurposed as a local area network for connecting individual user terminals (40) to each other and to a gateway device 9 through a switching/routing device 12. As such coaxial distribution networks 6 typically have a central distribution node in the roof space 4 close to the antenna 2, the switching/routing device 12 is also located there. The coaxial network 6 may also be used to deliver a low-voltage power supply 15 to the equipment 3, 12 installed in the roof space 4.

## Description

This invention relates to local area networks and is of particular application to Broadband Distribution in domestic premises, although it may have wider application.

The use of broadband and internet services in the home is increasing. Typically a home has an internet connection through a fibre optic or wired link between a "hub" on the customer premises (essentially a modem) and a "point of presence" at a local exchange. The links may be purpose-designed or re-purposed telephone lines, and quite high bandwidths have been achieved even over quite old "legacy" telephone lines. The hub also has a routing function to control a local area network on the customer premises, allowing individual devices to communicate with the Internet, and with each other.

A number of systems have been used to implement such local area networks. In larger installations, for example business premises, dedicated Ethernet connections can be provided but these can be expensive and disruptive to install in existing domestic premises. Wireless solutions (known as WLAN) are commonly used, but require security provisions to prevent misuse by persons not on the premises, and can be limited in capacity by channel congestion, interference and attenuation. Another technology sometimes used is known as "powerline", by carrying data over the wiring installed on the premises for the electrical power supply. However, domestic wiring installations are not designed for carrying data, and may have limited bandwidth. Many premises have two or more independent power circuits, for example to ensure power supply to essential equipment is maintained if equipment elsewhere on the premises causes a circuit breaker to trip. The system also requires each device to be connected to two electric sockets, one for the powerline adapter and a second to provide a power supply for the device itself.

One increasingly popular use for internet connections is for viewing video content delivered over the broadband network. Such programming can include not only live streaming (analogous to broadcast in the user experience) but also on-demand services, including paid-for content. This is rapidly taking over from viewing over-the-air broadcast channels.

Nevertheless, many houses in the UK have had a point-to-multipoint coax network installed, using 75 ohm characteristic impedance cable, to allow transmission of TV signals to several different rooms in the house, from a distribution amplifier connected to a receiving antenna. As receiving antennas are typically mounted on the roof of the premises, the distribution amplifier is generally located in the roof space, with individual coaxial cables running from the roof space to the individual rooms. In older buildings, such a network may have been installed piecemeal, as and when television sets have been installed in different rooms of the house, but in recent years such networks have been installed whilst the house was being built, with a branch to each room.

These networks were originally designed to carry analogue TV signals from typically 470 to 806MHz (and also FM radio signals from 88 to 108MHz), and although broadcast television now uses Digital Terrestrial Television transmission, the frequency spectrum has remained essentially the same and the same distribution amplifier can distribute television and radio content to every room in the house. Note that in the broadcast situation, each TV receiver selects the channel required, so the distribution amplifier forwards the entire range of channels to each branch, and does no selective switching.

A particular hazard of conventional broadcast TV reception is the possibility of lightning striking the external antenna and causing electrical damage to the coaxial cables and any equipment connected to it. Surge arrestors can help prevent damage to the terminals, but the network itself is also vulnerable, and can cause fires.

According to the present invention, there is provided a switching and routing device having a plurality of input ports and output ports for connection to a network of coaxial cables, and a routing function to direct data inputs arriving at the input ports to be transmitted from the output ports.

The invention also provides a coaxial cable network comprising a plurality of coaxial cable branches connected to a switching and routing device configured as defined above, wherein a first coaxial cable branch is connected to a gateway device connected to an external network. The gateway device may be connected to a modem by way of an Ethernet connection.

In a preferred embodiment, a first input port and a first output port of the device are operative to transmit and receive data over G.Fast connections for carrying data to and from a gateway device, and one or more further ports of the device are operative to transmit and receive data over a G.hn connection to and from user terminal devices.

The device may operate in combination with a distribution amplifier for television signals, wherein one or more of the ports each share a coaxial connection with a respective feed from the distribution amplifier through a diplexer.

One of the ports may have a power connection for extracting electrical power from the gateway device through the coaxial connection for powering the routing functions, the gateway device having an electrical power delivery system for connection to an external power supply. Preferably the electrical power is delivered over the coaxial cable connection at a lower voltage than the external power supply.

The port having the power connection may simultaneously also be used for data, and may also be connected to an external data network connection.

The present invention allows re-purposing of a point-to-multipoint coax in-home network to provide a local area network delivering high-quality broadband. The analogue distribution amplifier located in the roof space would be substituted by a routing device that can distribute Ethernet signals over the existing TV coax point-to-multipoint network to various terminal equipment located in any room in the premises to which the coax network reaches. This has the advantage that a 'wired' network is formed that is not subject to the over-the-air interference, attenuation and potential security threats to which a Wireless LAN ("Wi-Fi" network) in the home is subject, and can provide a consistently high data rate.

In a preferred embodiment, the ITU G.9960 series of standards known as G.hn (home networks) may be used for the connections between the router and the individual terminals. These standards allow point-to-multipoint transmission of digital data with rates up to 2Gbps over coax cables, and the bi-directional link from the home broadband hub to the G.hn switch/router replacing the analogue distribution amplifier may use the G.fast (ITU G.9701) standard.

The coaxial network may also be used to deliver low-voltage electrical power to the switch/router. This is particularly advantageous if the switch/router is located in the roof space, where building regulations do not normally permit a mains voltage (240V) supply other than a lighting circuit to power lights installed in the ceiling of the storey below. (Connecting other devices to a lighting circuit, such as ceiling-mounted extraction fans for bathrooms, or the aforementioned TV amplifier/distributors, is not permitted by most building regulations, although it is a common practice.

A standard for reverse powering over coaxial cables is in preparation (ETSI TS 101 548-2), although envisaged for delivering electrical power from an end-users network termination into the service provider's network, rather than to devices in the user's LAN.

An embodiment of the invention will now be described with reference to the drawings, in which:
Figure 1 depicts a typical coaxial cable network in a domestic premises
Figure 2 depicts a network according to a first embodiment of the invention in which the coaxial cable network is used both for a local area network and for TV distribution
Figure 3 depicts a network according to a second embodiment of the invention in which the coaxial cable network is also used for powering equipment in a roof space
Figure 4 depicts a third embodiment in which television is received over the fixed connection
Figure 5 depicts an alternative configuration.
Figure 6 depicts a switch router device according to the first embodiment of the invention
Figure 7 depicts a switch router device according to the second embodiment of the invention

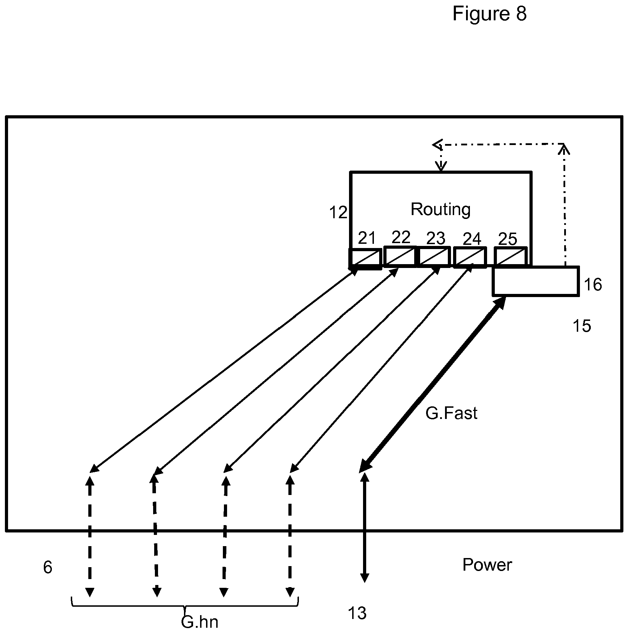

Figure 8 depicts a switch router device according to the third embodiment of the invention

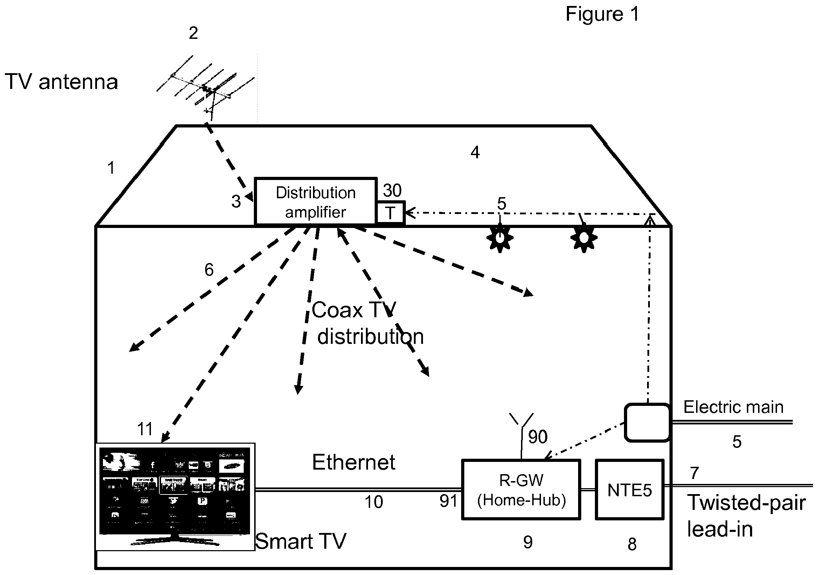

Figure 1 depicts a typical recent-build home 1. A roof-mounted television antenna 2 is connected to a Distribution Amplifier (DA) 3, which is located in a roof space 4 of the building in order to minimise attenuation of the signal received by the antenna before it is amplified by the Distribution Amplifier. The distribution amplifier 3 has a power supply 5, typically tapped from the lighting circuit in the ceiling of the uppermost storey. Recent-build homes are typically also equipped with an extensive coax point-to-point distribution infrastructure, generally indicated at "6" to allow televisions sets to be connected in each room. Many older houses have also had such a network fitted.

Typical distribution amplifiers 3 are uni-directional in operation, providing an antenna feed to each living room and bedroom within the dwelling through the coaxial cable network 6.

The house also has a fixed-wire communications connection 7, which may be a conventional "copper" twisted pair of the kind originally developed for analogue telephony but increasingly used for data transport (Digital Subscriber Loop), commonly known as "broadband). This connection is terminated by a network termination equipment 8 which feeds a residential gateway device 9 (also known as a "home hub". This residential gateway device would normally contain a wireless access point 90 and some Ethernet ports 91. In Figure 1 one of the ports 91 is depicted as providing an Ethernet connection 10 to a "smart TV" 11. The residential gateway is normally powered from the mains supply 5 through a power socket in the room in which it is located.

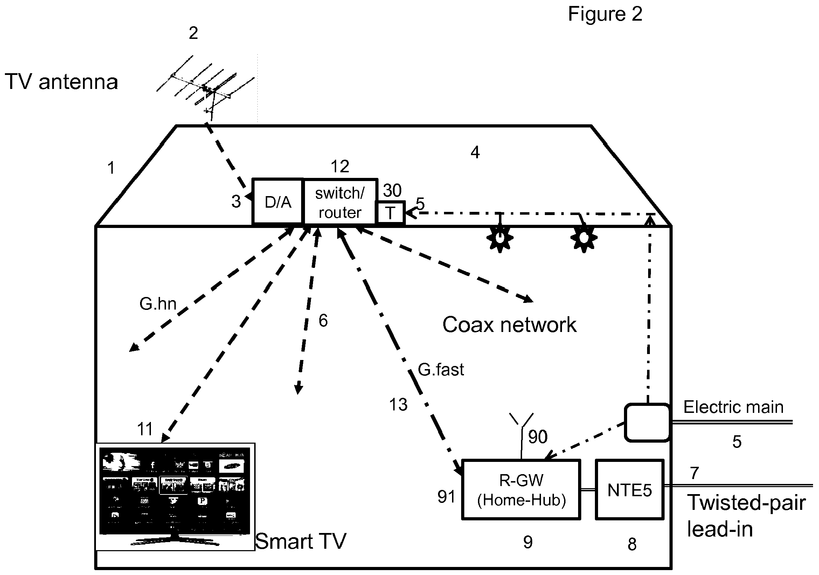

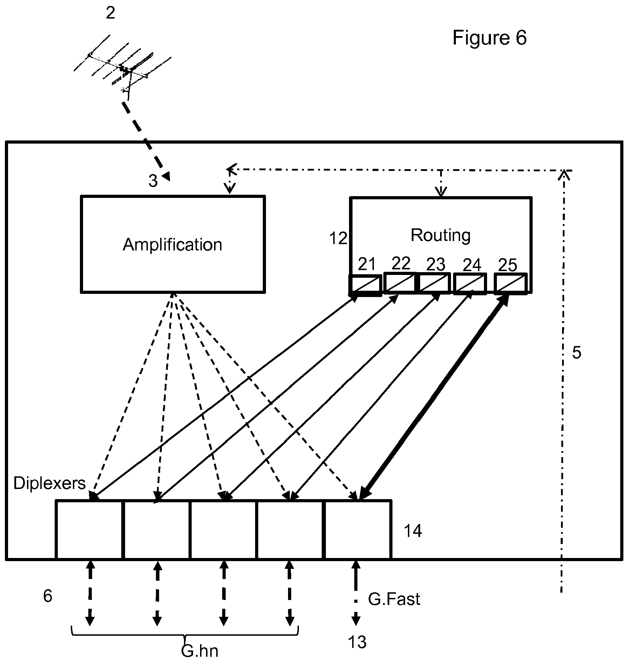

In a first embodiment of the invention, depicted in Figure 2 and Figure 6, the Distributor/Amplifier 3 has been augmented by a G.hn switch/router 12 that has a number of ports 21, 22, 23, 24, 25. It will be understood that in general each port 21, 22, 23, 24, 25 can comprise an input/output pair, as the coaxial network is suitable for bidirectional traffic. One port 25 is fed from the residential gateway 9 via a G.fast link 13 over one branch of the coax network 6. The other ports are connected to other branches of the coax network, to which can be connected user terminals 40. Both distributed TV and bi-directional data services can operate over the coax distribution network 6 via the use of diplexers 14 fitted to each leg of the coax distribution network. The diplexers provide a frequency split between the data using G.hn and the TV/FM radio parts of the frequency spectrum. The Smart TV 11 no longer needs to be fed from the residential gateway 9, but can derive its Ethernet connection from the G.hn distribution network 6 via G.hn.

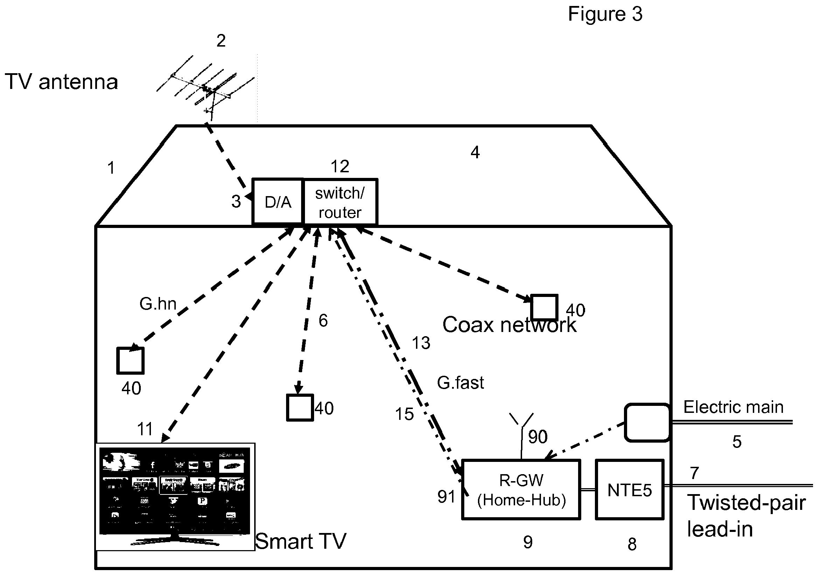

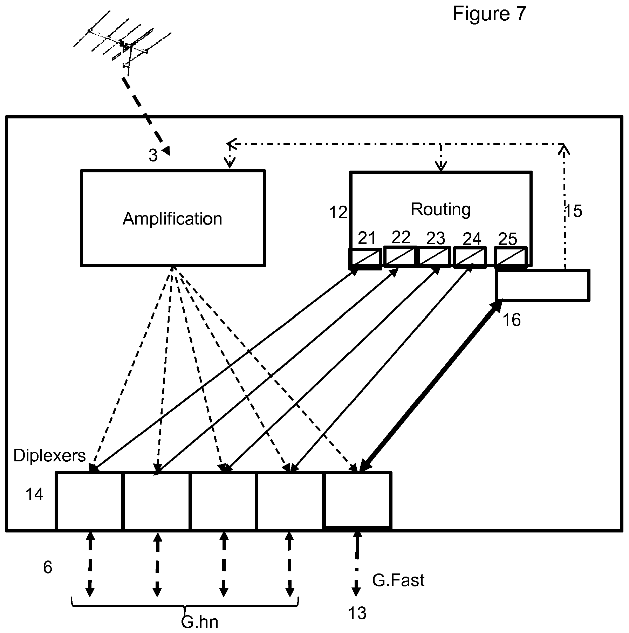

In a further embodiment of the invention, depicted in Figures 3 and 7, the local power supply 5 in the roof space 4 has been removed and the equipment 3, 12 located there is powered by a low-voltage feed 15 from the residential gateway 9 over one branch of the coaxial network 6, with a power take-off 16 to distribute power to the various functions 3, 12 in the roof space. This may be the same branch as that used for the G-fast connection 13. This low-voltage feed 15 takes the place of the mains-voltage feed 5 seen in Figures 1 and 2. As described above, running equipment in a confined and unattended roof space at mains voltage (240V) is hazardous. Conventional Distribution Amplifiers 3 (Figure 1), for use with external antennas, typically include a transformer/rectifier 30 to step the mains voltage down to 12Vdc to feed a head-end amplifier if required, largely to minimise hazards to anyone working on the roof should the antenna 2 become electrically live, but for applications inside the roof space, it is envisaged that intermediate voltages in the region of 60V could be used. Moreover, the specifications for reverse powering standards require that the voltage falls to zero very quickly under fault conditions.

It will be noted that in this and subsequent embodiments there is no need for an external antenna, and this reduces the risk of damage to the coaxial network, and to equipment connected to it, that might be caused by electrical storms.

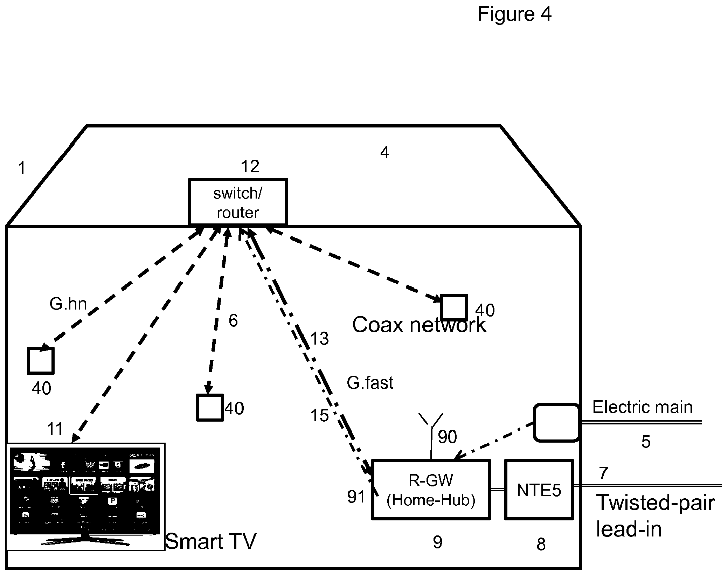

Figure 4 shows a further embodiment in which the antenna 2, distributor/amplifier 3 and diplexers 14 are dispensed with, there being no need for any TV distribution in the home as all content being shown comes over the broadband connection 7. There is no requirement for diplexers in this embodiment since there would be no requirement for spectrum sharing between TV and data. This broadband is distributed via the coax point-to-multipoint network 6 that was installed when the house was originally built.

A user may implement the invention stepwise, from an initial state as depicted in Figure 1 to the final state as depicted in Figure 4, but it is not necessary to go through the intermediate phases of Figures 2 and 3.

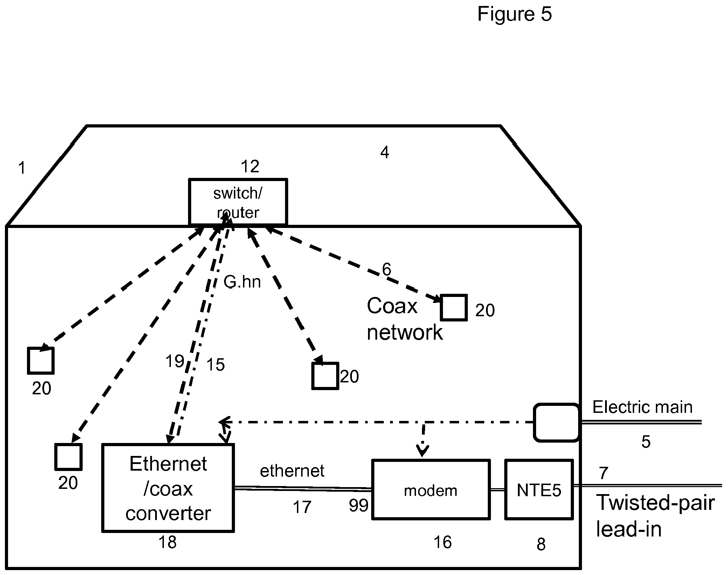

Figure 5 shows a simplified architecture using the same switch/router 12 as used in Figure 4, but in which the broadband input 7 (VDSL, G.fast or fibre) is terminated by a modem 16 which provides a single Ethernet port 99 through an Ethernet connection 17 to an interface unit 18. The interface unit 18 provides both power and data to the G.hn switch/router 12 located in the roof space 4 via one branch 19 of the coaxial network 6. The switch/router 12 then provides a bidirectional data link to each coax point in the house, connected to G.hn-to-Ethernet adapters 20 to provide an Ethernet port in every room.

These embodiments all provide a high-speed data network in the home that takes advantage of the extensive point-to-multipoint coaxial network already installed in the house. This network would have advantages over total home Wi-Fi solutions in that it would offer a consistent connection without interference.

## Claims

1. A switching and routing device having a plurality of input ports and output ports for connection to a network of coaxial cables, and a routing function to direct data inputs arriving at the input ports to be transmitted from the output ports.

2. A switching and routing device according to Claim 1, in which a first input port and a first output port of the device are operative to transmit and receive data over a G.Fast connection for carrying data to and from a gateway device, and one or more further ports of the device are operative to transmit and receive data over G.hn connections to and from user terminal devices.

3. A switching and routing device according to Claim 1 or Claim 2, in combination with a distribution amplifier for television signals, wherein one or more of the ports each share a coaxial connection with a respective feed from the distribution amplifier through a diplexer.

4. A switching and routing device according to Claim 1, Claim 2 or Claim 3, wherein one of the ports has a power connection for extracting electrical power from the coaxial connection for powering the routing functions.

5. A switching and routing device according to Claim 4, wherein the port having the power connection is simultaneously also used for data.

6. A switching and routing device according to Claim 5, wherein the port having the power connection is connected to an external data network connection.

7. A coaxial cable network comprising a plurality of coaxial cable branches connected to a switching and routing device configured according to any preceding claim, wherein a first coaxial cable branch is connected to a gateway device connected to an external network.

8. A coaxial cable network according to Claim 7, wherein the gateway device has an electrical power delivery system for connection to an external power supply and delivering electrical power over the coaxial cable connection.

9. A coaxial cable network according to Claim 8, wherein the electrical power is delivered over the coaxial cable connection at a lower voltage than the external power supply.

10. A coaxial cable network according to Claim 7, Claim 8, or Claim 9, wherein the gateway device is connected to a modem by way of an Ethernet connection.
